# EUROPÄISCHE PATENTSCHRIFT

(11) **EP 0 634 903 B1**
(45) Veröffentlichungstag und Bekanntmachung des Hinweises auf die Patenterteilung: **03.04.1996**
(21) Anmeldenummer: 93903982.2
(22) Anmeldetag: 17.02.1993
(51) Int. Cl.: A47J 31/06

(54) **BRÜHEINRICHTUNG FÜR EINE HAUSHALTS-ESPRESSOMASCHINE**
PRESSURE-FILTER DEVICE FOR A DOMESTIC ESPRESSO MACHINE
FILTRE A PRESSION POUR UNE MACHINE A CAFE EXPRESS MENAGERE

(30) Priorität: 11.04.1992 DE 4212288
(43) Veröffentlichungstag der Anmeldung: 25.01.1995
(73) Patentinhaber: Braun Aktiengesellschaft, Frankfurt am Main (DE)
(72) Erfinder: KLAWUHN, Manfred, D-60322 Frankfurt am Main (DE); HUFNAGL, Walter, D-65843 Sulzbach (DE); MÜLLER, Roland, D-63303 Dreieich (DE); SCHÄFER, Gerhard, D-60437 Frankfurt am Main (DE)
(86) Internationale Anmeldenummer: EP9300374
(87) Internationale Veröffentlichungsnummer: WO9320736

(56) Entgegenhaltungen:
- EP-A- 0 184 561
- DE-A- 1 454 200
- DE-A- 3 400 567
- DE-A- 3 422 432
- FR-A- 2 245 318
- IT-A- 520 753
- US-A- 1 903 519

## Beschreibung

Die Erfindung bezieht sich auf eine Brüheinrichtung für eine Haushalts-Espressomaschine mit in einem Gehäuseteil vertikal verschiebbaren Kolben und einem mit Kaffeemehl befüllbaren Siebkorb, der in einem horizontal beweglichen Siebkorbträger gehaltert ist und der bei abgesenktem, in den Siebkorb eingreifendem Kolben (Arbeitsstellung) mit diesem eine das Kaffeemehl einschließende Druckkammer bildet, in die kolbenseitig über eine Leitung heißes Wasser unter Druck eingepreßt wird und aus der siebkorbträgerseitig das zubereitete Espressogetränk über mindestens eine Auslaßöffnung abfließt,

Es ist bereits eine Espressomaschine mit einem elektrisch betriebenen Wassererhitzer bekannt, von dem das erhitzte Wasser einem mit Kaffeemehl befüllbaren Siebkorbträger (DE 34 00 567 C2) unter Druck zugeführt wird. Der Siebkorbträger besteht aus einem Filterträger mit fest angeordnetem Handgriff. In den Filterträger wird zur Aufnahme des Kaffeemehls ein herausnehmbares Filtersieb eingesetzt. Nach dem Füllvorgang des Filtersiebs wird der Filterträger von unten her an einen Bajonettverschluß des Gehäuses der Espressomaschine herangeführt, in diesen eingesetzt und dann durch Drehen des Filterträgers in eine Arbeitsstellung geschwenkt. Dabei wird der Filterträger mit dem eingesetzten Filter mittels Reibschluß abgedichtet. Dieser Arbeitsvorgang ist aufwendig und mitunter auch sehr zeitraubend, da sich insbesondere aufgrund der schlechten Sichtverhältnisse der Filterträger nicht immer exakt in den Bajonettverschluß einsetzen läßt.

Wird der Filterträger z.B. nicht genau bzw. koaxial unter den Bajonettverschluß geführt und dann in den Bajonettverschluß gerade eingesetzt, so kann der Filterträger verkanten und somit beschädigt werden. Weiterhin ist es von Nachteil, daß über den am Filtersieb ausgebildeten Auflagerand und eine im Gehäuseteil ausgebildete Dichtung stirnseitig die Druckkammer abgedichtet wird, und dies im Verdrehvorgang des Siebkorbträgers. Durch die entstehenden hohen Anpreßkräfte versucht dabei die elastische Dichtung dem Druck auszuweichen, indem sie sich deformiert. Die Folge ist daher oft eine Undichtigkeit an dieser Dichtstelle.

Es ist ferner eine Espressomaschine der eingangs aufgeführten Art bekannt (EP-0 184 561 A1), bei der der Filterträger in Schienen einer U-förmigen Halterung mit einem Zahnstangenantrieb geführt ist, um so den Filter aus einer Beschickungsstellung, die zur Aufnahme von Kaffeemehl im Siebkorb dient, in eine Arbeitsstellung, die zur Bildung der Druckkammer und somit zum Einspritzen von heißem Wasser unter Druck auf das Kaffeemehl dient, zu verschieben. Eine derartige Vorrichtung ist sehr aufwendig und teuer und daher für Haushaltsespressomaschinen nicht besonders gut geeignet.

Aus dem italienischen Patent 520 753 ist weiterhin eine für den industriellen Bedarf zum Einsatz kommende Espressomaschine bekannt, bei der am Umfang gleichmäßig verteilt vier Siebkorbhalteeinrichtungen angeordnet sind, mit denen über eine Vier-Stationen-Beschickungseinrichtung Espresso hergestellt werden kann. Bei dieser Anordnung werden also die Siebkorbträger um die Mittelachse des Gerätes gedreht, ein Herausschwenken der Siebkorbträger aus dem Gehäuse ist hier nicht möglich. Das Problem der Befüllung des Siebkorbträgers stellt sich hier auch nicht, da diese über die Vier-Stationen-Beschickungseinrichtung automatisch und nicht von Hand gefüllt werden.

Des weiteren ist aus der DE-34 22 432 A1 eine Maschine zur Herstellung von Espresso-Kaffee bekannt, bei der der in den Siebkorb einfahrende Kolben, der den eigentlichen Brühkopf bildet, aus dem Wirkungsbereich des Siebkorbträgers nach oben und seitlich um eine im Gehäuse der Espresso-Maschine ausgebildete Achse weggeschwenkt werden kann, um so das Befüllen und Entleeren des Siebkorbes zu erleichtern. Diese Ausführungsform ist nur deshalb möglich, da das Gerät fachwerkähnlich aufgebaut ist und somit sowohl von vorne wie von den Seiten zugänglich ist. Durch das Schwenken der Brüheinrichtung um eine etwa im Zentrum der Maschine angeordnete Welle, wird hierfür ein großer Freiraum benötigt, durch den die Baugröße der Maschine erheblich vergrößert wird. Ein Entfernen des Siebkorbträgers zum Entfernen des verbrauchten Kaffeemehls ist nach jedem Brühvorgang nicht möglich, da der Siebkorbträger fest am Gehäuse befestigt ist und ausschließlich nur über eine Auswerfereinrichtung vom verbrauchten Kaffeemehl befreit werden kann.

Demgemäß besteht die Erfindungsaufgabe darin, einen kostengünstigen und leicht zu handhabenden Siebkorbträger mit einer Andrückvorrichtung für eine Haushaltsespressomaschine zu schaffen die, ohne Kaffeemehl zu verstreuen, schnell befüllt werden kann und bei der der Siebkorbträger nach seinem Einschwenken in das Gehäuseteil stabil gelagert ist.

Gelöst wird die Aufgabe erfindungsgemäß dadurch, daß der Siebkorbträger mit dem Siebkorb bei angehobenem Kolben um eine vertikal verlaufende Schwenkachse aus dem Wirkungsbereich des Kolbens herausschwenkbar ist, daß der Schwenkbereich des Siebkorbträgers von seiner Arbeitsstellung bis zu seiner Beschickungsstellung reicht, in der der Siebkorb von außen zugänglich ist und daß der Siebkorbträger erst in seiner Arbeitsstellung gegenüber dem Gehäuseteil sowohl durch am Siebkorbträger als auch am Gehäuseteil ausgebildete Abstützelemente gegen eine Bewegung in vertikaler Richtung gesichert ist. Hierdurch wird auf einfache Weise ein leicht zu handhabender Siebkorbträger mit einer von Hand zu betätigenden Andrückvorrichtung geschaffen, die wegen der vorteilhaften Ausbildung, insbesondere der Andrückvorrichtung, störunanfällig arbeitet.

Durch das Heranschwenken des Siebkorbträgereinsatzes bzw. des Gehäuseteils an das Gehäuse der Espressomaschine wird sichergestellt, daß der Siebkorbträgereinsatz immer genau unter die Andrückvorrichtung plaziert wird, so daß der von Hand verschiebbare Kolben der Andrückvorrichtung keine Beschädigungen an dem Siebkorbträger herbeiführt.

Ferner läßt sich der Siebkorbträger bzw. das Gehäuseteil ohne weiteres aus dem Wirkungsbereich des Kolbens herausschwenken, um Espressokaffeemehl einzufüllen bzw. verbrauchtes Espressokaffeemehl zu entfernen, ohne daß dabei eine Hand einer Bedienungsperson ständig den Siebkorbträger halten muß. Das einfache Einführen des Kolbens in die Druckkammer, also in den vom Siebkorb gebildeten und das Kaffeemehl aufnehmenden Raum, erleichtert die Handlichkeit der Espressomaschine, zumal dabei eine weniger problemhafte Abdichtung durch die ringförmige Kolbendichtung erfolgt, deren Dichtwirkung mit zunehmendem Druck in der Druckkammer ebenfalls zunimmt.

Durch die Abstützelemente nach der Erfindung, die erst bei in das Gehäuseteil eingeschwenktem Siebkorbträger in Eingriff gelangen, wird überhaupt erst ermöglicht, daß der Siebkorbträger und der Siebkorb nach vorne aus dem Gehäuse der Espressomaschine herausgeschwenkt werden können. Weiterhin wird bei Druckbeaufschlagung der Druckkammer verhindert, daß der Siebkorbträger diesem Druck ausweicht. Die Abstützung des Siebkorbträgers erfolgt also nicht nur über die Schwenkachse, sondern zusätzlich über am Außenumfang der Druckkammer zwischen dem Gehäuseteil und dem Siebkorbträger zusammenwirkenden Abstützelementen. Würde eine Abstützung ausschließlich nur über die Schwenkachse erfolgen, was generell möglich wäre, so müßte diese verhältnismäßig aufwendig und stabil ausgeführt sein.

Wird die Lage der Schwenkachse durch zwei außerhalb des Wirkungsbereiches des Kolbens liegende und am Gehäuseteil ausgebildete Lagerpunkte festgelegt, so reichen bereits kleinere Schwenkwinkel am Siebkorbträger, um den Siebkorb aus diesem entfernen bzw. einetzen zu können. Je näher also die Schwenkachse zum Kolben herangeführt wird, desto größere Schwenkwinkel sind erforderlich, aber desto kleiner ist der beanspruchte Einbauraum für den Siebkorbträger.

Bei der Ausgestaltung von Abstützelementen um das Gehäuseteil und den Siebkorbträger herum ergibt sich der Vorteil, daß eine verhältnismäßig große Abstützfläche gebildet wird, die dann in ihrer Dimensionierung verhältnismäßig dünnwandig ausgebildet sein kann, die sich aber verstärkt, wenn Kunststoff als Material für das Gehäuseteil und den Siebkorbträger verwendet wird.

Um ein von den Abstützelementen ungehindertes Ein- bzw. Ausschwenken des Siebkorbträgers zu ermöglichen, liegen diejenigen Abstützelemente, die bei eingeschwenktem Siebkorbträger oberhalb der Trennebene von Siebkorbträger und Gehäuseteil liegen, in Schließrichtung im vorderen Bereich und diejenigen Abstützelemente, die bei eingeschwenktem Siebkorbträger unterhalb der Teilebene vom Siebkorbträger und Gehäuseteil liegen, in Schließrichtung im hinteren Bereich. Die Abstützung greift also erst dann, wenn der Siebkorbträger nahezu vollständig in das Gehäuseteil eingeschwenkt wurde.

Verlaufen die Abstützelemente im wesentlichen konzentrisch zu der Schwenkachse des Siebkorbträgers, so kann keine Behinderung beim Einschwenkvorgang des Siebkorbträgers durch die Abstützelemente entstehen.

Um während des Einspritzvorganges die auf den Siebkorbträger einwirkenden Axialkräfte schadlos auf das Gehäuseteil übertragen zu können, wird vorgeschlagen, daß die Abstützelemente parallel zur Trennebene verlaufen und daß diese mit quer zur Trennebene verlaufenden Versteifungsrippen versehen sind. Der im wesentlichen parallele Verlauf der Abstützelemente ermöglicht ein ungehindertes Einschwenken des Siebkorbträgers in das Gehäuseteil, bis die jeweils miteinander wirkenden Abstützelemente übereinander und zur Abstützung einander anliegend angeordnet sind. Dies erfolgt erst dann, wenn der Siebkorbträger vollkommen in das Gehäuseteil eingefahren ist, wobei dann eine stabile axiale Abstützung des Siebkorbträgers über die erst in dieser Stellung zusammenwirkenden Abstützelemente im Gehäuseteil erfolgt.

Um den Siebkorbträger unabhängig vom Siebkorb im ausgeschwenkten Zustand vom Gehäuseteil abheben zu können, so wie dies bei den von der Anmelderin bereits seit langem im Handel angebotenen Kaffeemaschinen vom Typ "Aromaster" der Fall ist, wird in einer Weiterbildung der Erfindung vorgeschlagen, daß der Siebkorbträger einen Gelenkzapfen aufweist, der mit seinen Enden in den am Gehäuseteil angeordneten Lageraugen einhängbar ist und somit gegen eine Bewegung in vertikaler Richtung gesichert ist. Der Siebkorbträger kann also dann, wenn er einmal gründlich gereinigt werden soll, von der Espressomaschine äußerst einfach und schnell ausgehängt werden.

In einer Weiterbildung der Erfindung ist vorgesehen, daß der Kolben mit einer Andrückvorrichtung versehen ist, die gegen die Wirkung einer Stellkraft verschiebbar und im Gehäuseteil geführt ist. Durch die gegen eine Stellkraft verschiebbare Andrückvorrichtung wird der Kolben von Hand schnell zum Siebkorbträger hingeführt, um die Druckkammer zu bilden. Anschließend nach dem Brühvorgang wird die Andrückvorrichtung wieder entkoppelt und der Kolben fährt aufgrund der auf ihn einwirkenden Stellkraft aus dem Siebkorb heraus, so daß der Siebkorbträger aus dem Gehäuseteil herausgeschwenkt werden kann und somit das verbrauchte Espressokaffeemehl aus dem Siebkorb entfernt werden kann. Dabei ist es vorteilhaft, daß die Stellkraft von einer Feder gebildet wird. Durch die Andrückvorrichtung wird sichergestellt, daß die Andrückvorrichtung immer dann in seine Ausgangsstellung zurückkehrt, wenn der Brühvorgang abgeschlossen ist, bzw. das Kaffeemehl nicht mehr zusammengedrückt zu werden braucht, so daß auch der Kolben aus dem Wirkungsbereich des Siebkorbträgers herausbewegt wird, um dann das eine Gehäuseteil in eine Entleerstellung zu verschwenken.

Ferner ist es vorteilhaft, daß die Führung zur verschiebbaren Aufnahme der Andrückvorrichtung des Siebkorbträgers eine zylindrische Bohrung ist, die im feststehenden Gehäuseteil der Espressomaschine vorgesehen ist, wobei die die Bohrung bildende Führung parallel zur Schwenkachse des Gehäuseteils verläuft.

Eine zusätzliche Möglichkeit ist gemäß einer Weiterbildung der erfindungsgemäßen Espressomaschine dadurch vorgesehen, daß die Andrückvorrichtung mit dem zugehörigen Kolben durch Verstellen der Andrückvorrichtung zumindest in einer das Espressokaffeemehl verdichtenden Stellung automatisch in eine Arretierungsstellung bringbar ist. Hierdurch erreicht der Kolben immer eine vorgegebene Schließstellung, d.h., das Volumen der Druckkammer ist nahezu immer gleich. Da bei derartigen Haushaltsespressomaschinen eine Zubereitung von maximal vier Espresso in einem Arbeitsgang möglich ist, wird das Volumen der Druckkammer auf eine Espressomehlmenge von maximal vier Tassen ausgelegt.

In weiterer Ausgestaltung der Erfindung ist es vorteilhaft, daß die Feder der Andrückvorrichtung auf einem in der Bohrung verschiebbar aufgenommenen Bolzen angebracht ist und mit ihrem einem Ende gegen einen am Bolzen vorgesehenen Handgriff und mit ihrem anderen Ende gegen die Oberseite des im Gehäuseteil ausgebildeten Einspritzkopfes zur Anlage kommt. Hierdurch wird die Feder auf einfache Weise geführt und zentriert und der Kolben neigt deshalb nicht zur Verkantung.

Eine besonders einfache Andrückvorrichtung wird dadurch erreicht, daß am Gehäuseteil ein quer zum Bolzen verlaufender und um eine Abstützfläche schwenkbarer Arretierungshebel vorgesehen ist, daß der Arretierungshebel über eine Paßbohrung den Bolzen eng umschließt und mit ihm ein Reibgesperre bildet, so daß durch Herunterdrücken des Arretierungshebels in eine Entriegelungsstellung der Bolzen frei verstellbar ist und durch Wegnahme des Stelldrucks in eine Arretierungsstellung der Bolzen über den Arretierungshebel unverschiebbar mit dem Gehäuseteil verbunden ist. Diese Andrückvorrichtung zeichnet sich durch ihre besondere Einfachheit aus. Sobald nämlich die im Arretierungshebel ausgebildete Bohrung eine gewisse Schrägstellung gegenüber dem Bolzen erreicht hat, verkantet sich der Bolzen in der Bohrung, so daß eine Klemmverbindung zwischen diesen Teilen entsteht. Die Folge ist, daß der mit dem Bolzen verbundene Kolben sich nicht mehr in seiner Führung axial nach oben bzw. nach unten verschieben kann. Ein derartiges Klemmgesperre ist stufenlos regelbar, so daß, wenn der Siebkorb mit mehr oder weniger Espressokaffeemehl gefüllt Ist, der Kolben stets so weit in die Druckkammer eingefahren wird, bis seine der Druckkammer zugewandte Kreisfläche an der Oberfläche des Espressomehls anschlägt. An dieser Stelle sei noch erwähnt, daß im Sinne der Erfindung auch durchaus anders ausgeführte Andrückvorrichtungen sowie andere Einrichtungen zum Arretieren und Lösen des Kolbens denkbar sind. So kann zum Beispiel die Andrückvorrichtung nach einer weiteren Erfindung aus einer am Kolbensystem ausgebildeten Gehäuseanordnung bestehen, die mit einer am Gehäuseteil angeordneten Gewindeanordnung zusammenwirkt, so daß bei kleinen Schwenkwinkeln am Kolbensystem der gewünschte Kolbenhub erreicht wird.

Damit der Verkantungseffekt zwischen der Bohrung des Hebels und dem Bolzen immer dann eintritt, wenn eine Bedienungsperson den Arretierungshebel freigibt, ist in einer Weiterbildung der Erfindung vorgesehen, daß daß der Arretierungshebel durch die Wirkung einer Druckfeder stets in seiner den Bolzen unverschiebbar haltenden Arretierungsstellung hält. Durch die zusätzliche Druckfeder wird der Arretierungshebel, bezogen auf seinen Abstützpunkt an der Abstützfläche, stets entgegen den Uhrzeigersinn so lange verdreht, bis seine Bohrung sich mit dem Bolzen verkantet. Eine derartige Andrückvorrichtung gibt also den Kolben frei, wenn dieser zur Bildung einer Druckkammer zum Siebkorb hin bewegt wird. Er wird gesperrt, wenn die auf den Handgriff des Kolbens aufgelegte Andrückkraft entfällt, da dann der Bolzen in der Bohrung des Arretierungshebels selbsttätig verkantet.

Um nach Bildung einer Druckkammer das heiße Wasser in diese einführen zu können, ist in einer Weiterbildung der Erfindung vorgesehen, daß der Kolben eine zur Druckkammer hin offene Düse aufweist, die mit einer zwischen Kolben und Gehäuseteil ausgebildeten Leitung mit einer das heiße Wasser unter Druck setzenden Fördereinrichtung verbunden ist. Der Kolben ist also über eine flexible Anschlußleitung mit einer Förderdruckeinrichtung verbunden, die nach Bildung der Druckkammer heißes Wasser in diese unter hohem Druck einspritzt.

Um eine gute Handhabung des Siebkorbes zu ermöglichen, ohne daß dabei die Hand einer Bedienungsperson verbrannt oder durch Kaffeemehl verschmutzt wird, wird in einer Weiterbildung der Erfindung vorgeschlagen, daß am Siebkorb eine Handhabe radial herausragend ausgebildet ist.

Zwei Ausführungsbeispiele der Erfindung sind in der Zeichnung dargestellt und werden im folgenden näher erläutert. Es zeigen:
- Fig. 1: Längsschnitt durch eine Brüheinrichtung einer Espressomaschine, bei der der Siebkorbträger in das Gehäuseteil eingeschwenkt ist und der Kolben in einer angehobenen Kolbenstellung, also der Parkstellung, vor dem Verdichten des Kaffeemehls dargestellt ist, wobei der Längsschnitt durch den Mittelpunkt des Kolbens und durch die Schwenkachse des Siebkorbträgers erfolgt,
- Fig. 2: wie Fig. 1, jedoch erfolgte der Längsschnitt durch die Brüheinrichtung um 90° verdreht zu Fig. 1 durch den Kolben, wobei sich dieser in der unteren Arbeitsstellung nach dem Verdichten des Kaffeemehls, also in der Brühstellung befindet,
- Fig. 3: Längsschnitt durch die Brüheinrichtung gemäß der Schnittführung III-III nach Fig. 1,
- Fig. 4: wie Fig. 3, jedoch ist hier der Siebkorb aus dem Gehäuseteil um die Schwenkachse herausgeschwenkt und nimmt somit seine Beschickungsstellung ein,
- Fig. 5: Längsschnitt durch eine weitere Brüheinrichtung mit gegenüber den Figuren 1 bis 4 geänderter Abstützeinrichtung, wobei der Siebkorbträger eine teilweise ausgeschwenkte Stellung einnimmt,
- Fig. 6: Draufsicht auf die Brüheinrichtung nach Fig. 5, wobei allerdings der Siebkorbträger vollständig aus dem Gehäuseteil ausgeschwenkt ist, also seine Beschickungsstellung einnimmt und
- Fig. 7: Längsschnitt durch die in den Figuren 5 und 6 dargestellte Brüheinrichtung, allerdings in Parkstellung.

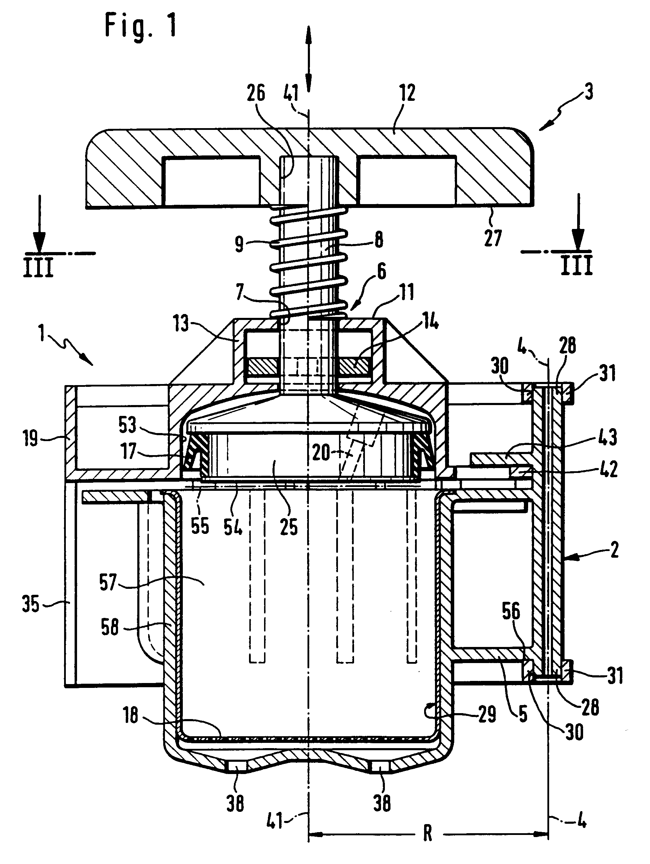

In den Figuren 1 bis 7 ist ein in einem Gehäuseteil 19 schwenkbar gelagerter Siebkorbträger 2 einer Brüheinrichtung 1 dargestellt, die Teil einer in der Zeichnung nicht näher dargestellten Espressomaschine für den Haushalt ist. Die Espressomaschine besteht weiterhin aus einer in der Zeichnung nicht dargestellten Heizvorrichtung, in der Wasser erhitzt wird, das dann unter Druck der Brüheinrichtung 1 zugeführt wird.

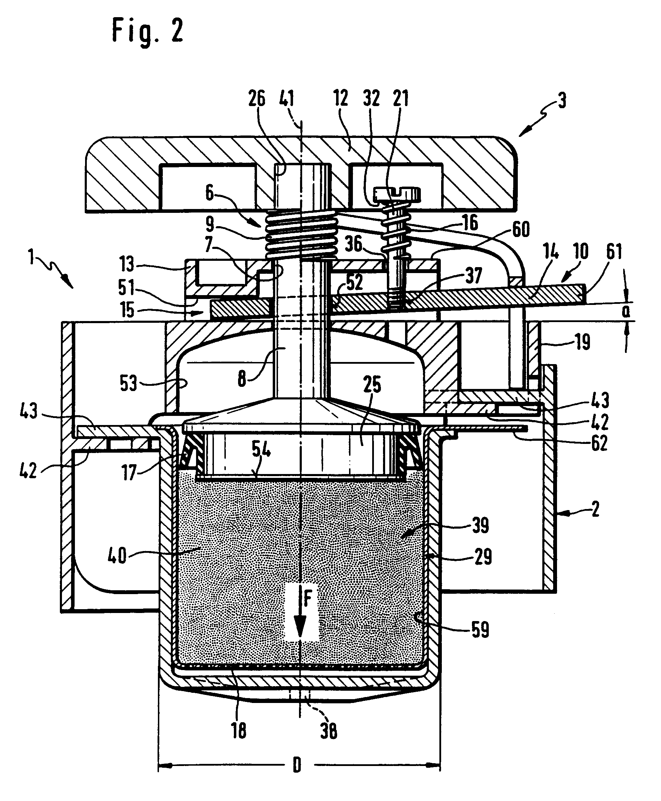

Die Brüheinrichtung 1 besteht im wesentlichen aus dem in der Espressomaschine fest integrierten Gehäuseteil 19, an dessen in den Figuren 1 und 2 dargestellten oberen Ende ein runder oder sonstwie frei wählbarer, gegebenenfalls mit einer Riffelung versehener Handgriff 12 ausgebildet ist, der mit einer mittig angeordneten Bohrung 26 zur Aufnahme, Befestigung und Zentrierung eines Bolzens 8 versehen ist. Der Bolzen 8 ist in einer als Gleit-Schiebe-Führung 6 ausgebildeten Bohrung 7 zwischen einer Beschickungsstellung (Figuren 1, 4, 5, 6 und 7) und einer Arbeitsstellung (Fig. 2) verschiebbar. Die Bohrung 7 befindet sich im Einspritzkopf 13 des Gehäuseteils 19.

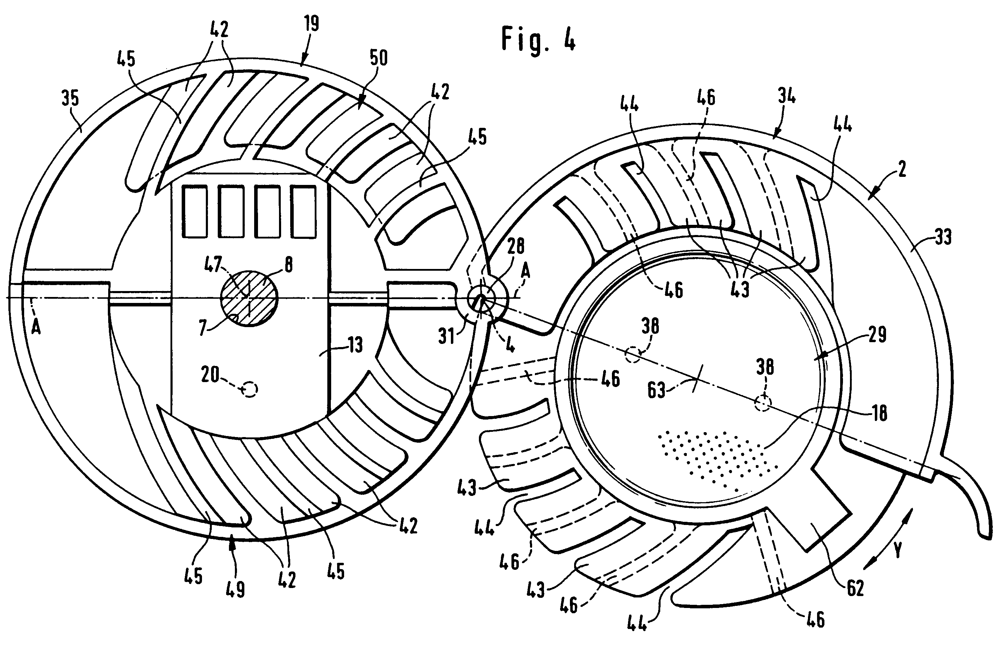

Zwischen der Unterseite 27 des Handgriffs 12 und der Oberseite 11 des Einspritzkopfes 13 befindet sich eine Feder 9, die den Bolzen 8 konzentrisch umgibt und von diesem zentriert wird und die die Aufgabe hat, den Handgriff 12 stets in seine gemäß Fig. 1 obere Ausgangsposition, die auch gleichzeitig die Beschickungsstellung darstellt, zu verschieben, wenn der Siebkorbträger 2 herausgeschwenkt werden soll (Fig. 4).

Das Gehäuseteil 19 weist nach den Figuren 1 bis 7 eine zum Siebkorbträger 2 hin offene, topfförmig ausgebildete Ausnehmung 53 auf, die zur Aufnahme eines mit dem Bolzen 8 verbundenen Kolbens 25 dient, wenn dieser durch die Feder 9 der Andrückvorrichtung 3 in seine in Fig. 1 dargestellte Beschickungsstellung gebracht worden ist. Dabei fährt der Kolben 25 so weit in die Ausnehmung 53, daß seine Stirnseite 54 oberhalb der Teilebene 55 zwischen dem Gehäuseteil 19 und dem Siebkorbträger 2 liegt, so daß der Siebkorbträger 2 aus dem Gehäuseteil 19 herausgeschwenkt werden kann, ohne daß der Kolben 25 hinderlich ist.

Am Gehäuseteil 19 sind nach Fig. 1 senkrecht übereinanderstehend zwei Lageraugen 31 angeformt, in die zwei an entsprechender Stelle am Siebkorbträger 2 ausgebildete Gelenkzapfen 28 einhängbar sind, so daß der Siebkorbträger 2 um die so gebildete Schwenkachse 4 nach Fig. 2 zwischen seiner Arbeitsstellung zum Überbrühen des Kaffeemehls 39 und gemäß Fig. 4 einer Füll- bzw. Entleerstellung in einer horizontalen Schwenkebene in Schwenkrichtung Y verstellbar ist, die in einem rechten Winkel zur Schwenkachse 4 verläuft.

Die Gelenkzapfen 28 des Siebkorbträgers 2 sind in je einer Bohrung 30 des oberen und des unteren Lagerauges 31 am Gehäuseteil 19 aufgenommen. Die Schwenkachse 4 liegt außerhalb des Wirkungsbereichs des vom Handgriff 12 nach Fig. 2 vertikal verschiebbaren Kolbens 25 und sie weist einen Abstand R zur Längsmittelachse 41 des Kolbens 25 auf, der größer ist, als der Gehäusedurchmesser D der Druckkammer 40 des am Siebkorbträger 2 ausgebildeten Gehäuseabschnitts 58.

Die beiden mit Abstand zueinander angeordneten Lageraugen 31 sind nach Fig. 1 so weit voneinander entfernt, daß der Siebkorbträger 2 mit seinen beiden Gelenkzapfen 28 in vertikaler Richtung soweit angehoben werden kann, bis der untere Gelenkzapfen 28 aus der unteren Bohrung 30 des als Lagerpunkt dienenden Lagerauges 31 herausgenommen werden kann. Danach läßt sich der Siebkorbträger 2 um seinen unteren Gelenkzapfen 28 ein wenig oberhalb des Lagerauges 31 kippen und seitlich herausnehmen. Der Einsetzvorgang des Siebkorbträgers 2 in das Gehäuseteil 19 erfolgt sinngemäß in der umgekehrten Reihenfolge, bis die am unteren Gelenkzapfen 28 angeformte Querwand 5 der Oberseite 56 des unteren als Lagerpunkt dienenden Lagerauges 31 anschlägt. Dabei muß dann noch der obere Gelenkzapfen 28 ausreichend weit in die Bohrung 30 des oberen Lagerauges 31 eingreifen, wie dies Fig. 1 deutlich zeigt.

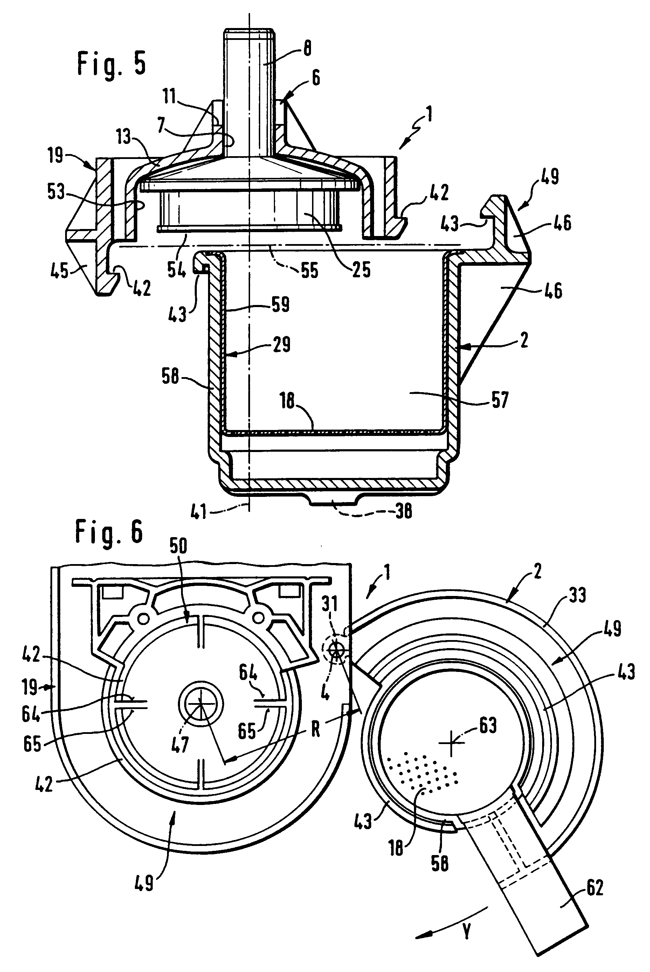

Zum Siebkorbträger 2 gehört ein in den zylindrisch ausgebildeten Gehäuseabschnitt 58 einsetzbarer Siebkorb 29 zur Aufnahme des Espressokaffeemehls 39, das in der Stellung gemäß den Figuren 4 und 6 des Siebkorbträgers 2 in den Siebkorb 29 eingefüllt werden kann. Danach wird der Siebkorbträger 2 aus der Stellung gemäß den Figuren 4 und 6 in die Stellung gemäß den Figuren 1, 3, 7 verschwenkt, so daß der vom Siebkorb 29 gebildete Aufnahmeraum 57 genau unter die den Kolben 25 aufweisende Andrückvorrichtung 3 gelangt. Der Kolben 25 wird zur Komprimierung des im Siebkorbträgereinsatz 29 aufgenommenen Espressokaffeemehls 39 und zur Bildung der Druckkammer 40 (Figur 2) längs seiner Längsmittelachse 41 in den Siebkorbträgereinsatz 29 eingeschoben.

Wie insbesondere aus Figur 4 hervorgeht, weist der Gehäuseteil 19 zahlreiche, einen gleichmäßigen Abstand untereinander aufweisende Versteifungsrippen 45 auf, die auf der Oberseite von Abstützelementen 42 am Gehäuseteil 19 angeordnet sind, die nach oben hervorstehen und die radial außen in einen das Gehäuseteil 19 begrenzenden, zylindrisch verlaufenden Wandabschnitt 35 einmünden. Ferner verlaufen die einzelnen Versteifungsrippen 45 konzentrisch zur Schwenkachse 4 und erstrecken sich radial nach außen, so daß sie in entsprechende, ebenfalls konzentrisch zur Schwenkachse 4 verlaufende Gegenstücke bzw. Aussparungen 44 eingeschoben werden können, die hierzu auf Abstützelementen 43 des Siebkorbträgers 2 vorgesehen sind. Die Abstützelemente 43 im vorderen Bereich 34 des Siebkorbträgers 2 münden in eine konzentrisch zum Mittelpunkt 63 verlaufende Zylinderwand 33, die in Arbeitsstellung eine gemeinsame Wand mit dem Wandabschnitt 35 bildet.

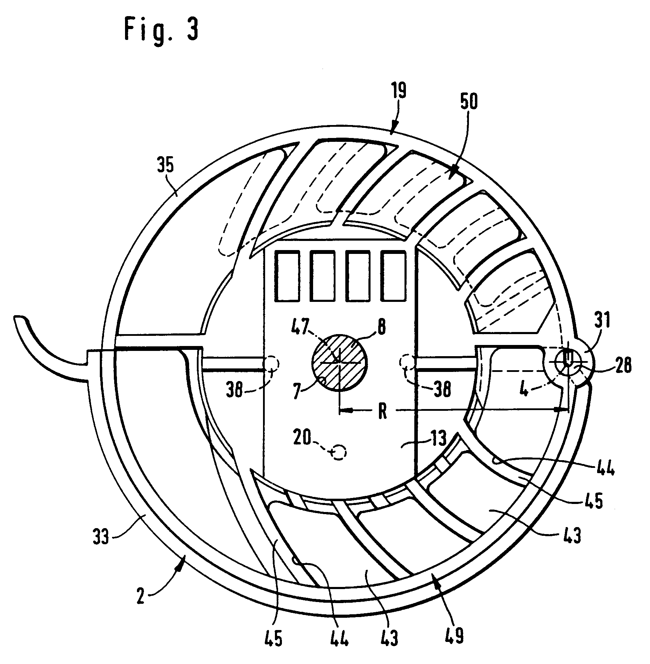

Wird der Siebkorbträger 2 aus der in Figur 4 dargestellten Stellung in die in Figur 3 dargestellte Stellung verschwenkt, so werden die Versteifungsrippen 45 des Gehäuseteils 19 in die Aussparungen 44 des Siebkorbträgers 2 kammartig eingeführt. Die Versteifungsrippen 45 werden mit den Aussparungen 44 verzahnt, so daß sich in der eingeschwenkten Stellung des Siebkorbträgers 2 in das Gehäuseteil 19 gemäß Fig. 3 eine formschlüssige Verbindung ergibt. Dabei stützen sich die Abstützelemente 43 des Siebkorbträgers 2 auf den Abstützelementen 42 des Gehäuseteils 19 ab (Fig. 2). Gleiches gilt für die Abstützelemente 42, 43 im hinteren, also nach Figuren 3 und 4 oberen Bereich. Auch hier greifen dann die Versteifungsrippen 45 in die Aussparungen 44 des Siebkorbträgers 2 ein.

In Schließstellung des Siebkorbträgers 2 wird also die beim Brühvorgang durch den Druck in der Druckkammer 40 am Siebkorbträger 2 gemäß Fig. 2 nach unten entstehende Druckkraft F über die außerhalb des Gehäuseabschnitts 58 am Siebkorträger 2 ausgebildeten, vorderen und hinteren Abstützelemente 43 auf die entsprechenden vorderen und hinteren Abstützelemente 42 des Gehäuseteils 19 übertragen. Die Schwenkachse 4 dient also ausschließlich nur zum Schwenken des Siebkorbträgers 2, nicht zur Kraftübertragung.

Nachdem das Espressokaffeemehl 39 in den Siebkorb 29, der bereits in den Siebkorbträger 2 eingesetzt ist, eingefüllt ist, wird der Kolben 25 mittels der Andrückvorrichtung 3 aus der Stellung gemäß Fig. 1 in die Stellung gemäß Fig. 2 verschoben, indem eine Bedienungsperson den Handgriff 12 und somit den Kolben 25 so weit nach unten schiebt, daß dadurch das Espressokaffeemehl 39 verdichtet wird. Durch die am Kolben 25 ausgebildete Dichtung 17 wird verhindert, daß sich das Kaffeemehl 39 am Kolben 25 vorbeischiebt bzw. daß das Heißwasser aus der Druckkammer 40 nach oben entweichen kann. Die Dichtung 17 wird von einer ringförmien Dichtmanschette gebildet, die, je mehr Druck in der Druckkammer 40 herrscht, desto fester gegen die Zylinderwandung 59 des Siebkorbes 29 drückt, also immer mehr dichtet.

Wie aus Figuren 1 und 2 hervorgeht, wird auf dem Bolzen 8 die Feder 9 zentriert, die die Aufgabe hat, den Kolben 25 stets nach oben zu drücken. Um jedoch den Kolben 25 - entgegender Kraft der Feder 9 - in der gewünschten, das Kaffeemehl 39 komprimierenden Stellung festzuklemmen, ist die Andrückvorrichtung 3 mit einer einen Arretierungshebel 14 aufweisenden Arrretierungsvorrichtung 10 ausgestattet. Der Arretierungshebel 14 besteht nach Fig. 2 aus einem länglichen Blechstreifen mit einer Paßbohrung 52, in der der Bolzen 8 höhenbeweglich verschiebbar ist. Gemäß Figur 2 ist das linke Ende des Arretierungshebels 14 in einer Aussparung 15 aufgenommen, die im Gehäuseteil 19 vorgesehen ist.

Ferner ist der Arretierungshebel 14 nach Fig. 2 rechts des Bolzens 8 mit einem Stift 21 verschraubt und wirkungsmäßig verbunden. Der Stift 21 erstreckt sich durch die in dem Einspritzkopf 13 vorgesehene Bohrung 36 und ist in der in dem Arretierungshebel 14 vorgesehenen Gewindebohrung 37 fest verschraubt. Der Stift 21 weist eine Stufe 32 auf. Zwischen der Stufe 32 und der Oberseite 60 des Einspritzkopfes 13 stützt sich eine Druckfeder 16 ab und zieht den Arretierungshebel 14 derart nach oben, daß der Bolzen 8 mit dem Handgriff 12 automatisch festgeklemmt wird. Der Arretierungshebel 14 schneidet dabei die Längsmittelachse 41 in einem Winkel a, der geringfügig größer ist als 90°. Diese Klemmstellung des Arretierungshebels 14 hält solange an, solange kein Druck auf den Handgriff 12 in Richtung des Siebkorbträgers 2 ausgeübt wird.

Soll beispielsweise der Kolben 25 über den Handgriff 12 nach unten verstellt werden, um das Espressokaffeemehl 39 zu komprimieren, so wird dabei auch durch die Abwärtsbewegung des Bolzens 8 der Arretierungshebel 14 ebenfalls geringfügig nach unten gedrückt und die Arretierung zwischen dem Bolzen 8 und dem Arretierungshebel 14 kurzfristig aufgehoben, so daß sich der Bolzen 8 ohne weiteres durch die Paßbohrung 52 des Arretierungshebels 14 schieben kann. Sobald der Handgriff 12 wieder losgelassen wird, zieht der Stift 21 über die Druckfeder 16 den Arretierungshebel 14 in seine Klemmstellung gemäß Fig. 2 und setzt den Bolzen 8 erneut fest, indem sich dieser in der Paßbohrung 52 verkantet.

In der Arbeitsstellung ist gemäß Fig. 2 das Kaffeemehl 39 komprimiert, und das heiße Wasser kann über die im Kolben 25 ausgebildete Leitung 20 der im Siebkorb ausgebildeten Druckkammer 40 zugeführt werden, in der sich das zu extrahierende Kaffeemehl 39 befindet. Die Leitung 20 ist über ein in der Zeichnung nicht dargestelltes Verbindungsrohr mit einer elektrisch betriebenen Pumpeinrichtung verbunden, die heißes Wasser unter Druck setzt.

Der fertige Espresso fließt über in dem Siebkorbträger 2 vorgesehene Auslaßöffnungen 38 in eine darunter abgestellte Tasse (nicht dargestellt) ab. Damit das verbrauchte Espressokaffeemehl 39 aus dem Siebkorb 29 entfernt werden kann, wird zunächst auf das rechte Ende 61 des Arretierungshebels 14 nach Fig. 2 nach unten gedrückt, so daß die Andrückvorrichtung 3 mitsamt dem Kolben 25, dem Bolzen 8 und dem Handgriff 12 aus der in Fig. 2 dargestellten Arbeitsstellung in die in Fig. 1 dargestellte Beschickungsstellung fährt. Dieser Vorgang wird durch die Feder 9 verursacht, die sich an der Oberseite 11 des Einspritzkopfes 13 abstützt und über den Handgriff 12 den Kolben 25 nach oben zieht.

Ist die in Fig. 1 dargestellte Position der Brüheinrichtung 1 erreicht, so kann der Siebkorbträger 2 um die Schwenkachse 4 gemäß den Figuren 4 und 6 entgegen dem Uhrzeigersinn so weit herausgeschwenkt werden, bis die in diesen Figuren dargestellte Beschickungsstellung erreicht ist. Anschließend kann der Siebkorb 29 aus dem Siebkorbträger 2 mitsamt dem verbrauchten Kaffeemehl 39 herausgehoben werden und das Kaffeemehl 39 kann aus dem Siebkorb 29 entfernt werden. Dadurch, daß der Siebkorb 29 aus dem Siebkorbträger 2 entfernt werden kann, ohne daß dabei der Siebkorbträger 2 selbst in der Hand einer Bedienungsperson gehalten werden muß, ergibt sich eine besonders leichte Handhabung des Siebkorbes 29. Die Handhabung des Siebkorbes 29 kann noch dadurch vereinfacht werden, daß am Siebkorb 29 eine Handhabe 62 radial herausragend ausgebildet ist (Fig. 4), so daß auch Verbrennungen der Hand beim Herausnehmen des noch heißen Siebkorbes 29 vermieden werden. Im eingeschwenkten Zustand des Siebkorbes 2 ist die Handhabe 62 durch den zylindrischen Wandabschnitt 33 verdeckt.

Die Brüheinheit nach den Figuren 5 bis 7 unterscheidet sich gegenüber der nach den Figuren 1 bis 4 lediglich dadurch, daß anstelle der segmentförmig und konzentrisch zur Schwenkachse 4 verlaufenden Abstützelemente 42, 43 diese nun konzentrisch zu ihren Mittelpunkten 47 bzw. 63 des Gehäuses 19 bzw. des Siebkorbträgers 2 verlaufen, wobei der hintere Bereich 50 der Abstützflächen 42, 43 unterhalb der Teilebene 55 und der vordere Bereich 49 der Abstützflächen 42, 43 oberhalb der Teilebene 55 nach Fig. 5 verlaufen. Auch diese konzentrisch zu den Mittellinien 47, 63 verlaufenden Abstützflächen 42, 43 sind mit Versteifungsrippen 45 bzw. 46 versehen.

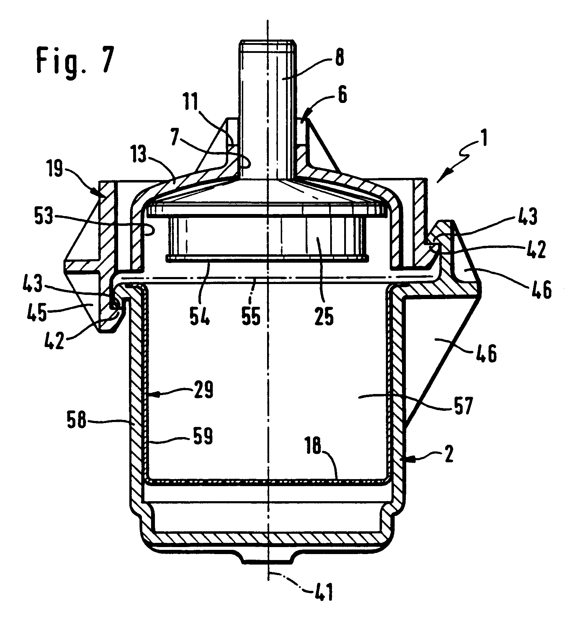

Was die Andrückvorrichtung 3, die Arretiervorrichtung 10 und die Lagerung des Siebkorbträgers 2 am Gehäuseteil 19 betrifft, so kann diese in den Figuren 5 bis 7 entsprechend den Anordnungen in den Figuren 1 bis 4 ausgebildet sein. Der Einfachheit halber wurden diese Anordnungen in den Figuren 5 bis 7 nicht näher dargestellt. Auch alle Bauteile, die in den Figuren 5 bis 7 denjenigen Bauteilen in den Figuren 1 bis 4 entsprechen, wurden mit gleichen Bezugszeichen gekennzeichnet. Wie weiterhin aus den Figuren 5 und 7 ersichtlich ist, wurde auch am Kolben 25 der Dichtring 17, wie er in Fig. 1 und 2 dargestellt ist, nicht eingezeichnet.

In Fig. 6 ist noch deutlich zu erkennen, daß der Übergang der gegenüber der Teilebene 55 (Fig. 5) tiefer gelegene Bereich der Abstützflächen 42, 43 an der Kontur 64 endet und der gegenüber der Teilebene 55 höher gelegene Bereich der Abstützflächen 42, 43 mit der Kontur 65 beginnt.

## Patentansprüche

1. Brüheinrichtung (1) für eine Haushalts-Espressomaschine mit in einem Gehäuseteil (19), vertikal verschiebbaren Kolben (25) und einem mit Kaffeemehl (39) befüllbaren Siebkorb (29), der in einem horizontal beweglichen Siebkorbträger (2) gehaltert ist und der bei abgesenktem, in den Siebkorb (29) eingreifendem Kolben (25) (Arbeitsstellung) mit diesem eine das Kaffeemehl (39) einschließende Druckkammer (40) bildet, in die kolbenseitig über eine Leitung (20) heißes Wasser unter Druck eingepreßt wird und aus der siebkorbträgerseitig das zubereitete Espressogetränk über mindestens eine Auslaßöffnung (38) abfließt,
**dadurch gekennzeichnet**,
daß der Siebkorbträger (2) mit dem Siebkorb (29) bei angehobenem Kolben (25) um eine vertikal verlaufende Schwenkachse (4) aus dem Wirkungsbereich des Kolbens (25) herausschwenkbar ist, daß der Schwenkbereich des Siebkorbträgers (2) von seiner Arbeitsstellung bis zu seiner Beschickungsstellung reicht, in der der Siebkorb (29) von außen zugänglich ist und daß der Siebkorbträger (2) erst in seiner Arbeitsstellung gegenüber dem Gehäuseteil (19) sowohl durch am Siebkorbträger (2) als auch am Gehäuseteil (19) ausgebildete Abstützelemente (43, 42) gegen eine Bewegung in vertikaler Richtung gesichert ist.

2. Brüheinrichtung nach Anspruch 1,
**dadurch gekennzeichnet,**
daß die Lage der Schwenkachse (4) durch zwei außerhalb des Wirkungsbereichs des Kolbens (25) liegende und am Gehäuseteil (19) ausgebildete Lagerpunkte (31) festgelegt wird.

3. Brüheinrichtung nach Anspruch 1,
**dadurch gekennzeichnet**,
daß die Abstützelemente (42, 43) um die Druckkammer (40) verteilt am Gehäuseteil (19) und am Siebkorbträger (2) angeordnet sind.

4. Brüheinrichtung nach Anspruch 3,
**dadurch gekennzeichnet,**
daß diejenigen Abstützelemente (43, 42), die bei eingeschwenktem Siebkorbträger (2) oberhalb der Trennebene (A-A) von Siebkorbträger (2) und Gehäuseteil (19) liegen, in Schließrichtung (Y) im vorderen Bereich (49) liegen und daß diejenigen Abstützelemente (43, 42), die bei eingeschwenktem Siebkorbträger (2) unterhalb der Teilebene (55) vom Siebkorbträger (2) und Gehäuseteil (19) liegen, in Schließrichtung (Y) im hinteren Bereich (50) liegen.

5. Brüheinrichtung nach Anspruch 4,
**dadurch gekennzeichnet**,
daß die Abstützelemente (43, 42) im wesentlichen konzentrisch zu der Schwenkachse (4) verlaufen.

6. Brüheinrichtung nach Anspruch 5,
**dadurch gekennzeichnet**,
daß die Abstützelemente (42, 43) parallel zur Trennebene (A-A) verlaufen und daß diese mit quer zur Trennebene (A-A) verlaufenden Versteifungsrippen (45, 46) versehen sind.

7. Brüheinrichtung nach Anspruch 2,
**dadurch gekennzeichnet**,
daß der Siebkorbträger (2) einen Gelenkzapfen (28) aufweist, der mit seinen Enden in den am Gehäuseteil (19) angeordneten Lageraugen einhängbar ist und somit gegen eine Bewegung in vertikaler Richtung gesichert ist.

8. Brüheinrichtung nach Anspruch 1,
**dadurch gekennzeichnet**,
daß der Kolben (25) mit einer Andrückvorrichtung (3) versehen ist, die gegen die Wirkung einer Stellkraft verschiebbar und im Gehäuseteil (19) geführt ist.

9. Brüheinrichtung nach Anspruch 8,
**dadurch gekennzeichnet**,
daß die Andrückvorrichtung (3) des Siebkorbträgers (2) gegen die Wirkung einer Feder (9) in einer in Bewegungsrichtung des Kolbens (25) oberhalb verlaufenden Führung (6) des Gehäuseteils (19) verschiebbar aufgenommen ist.

10. Brüheinrichtung nach Anspruch 9,
**dadurch gekennzeichnet**,
daß die Führung (6) zur verschiebbaren Aufnahme der Andrückvorrichtung (3) des Siebkorbträgers (2) eine zylindrische Bohrung (7) ist, die in dem feststehenden Gehäuseteil (18) der Espressomaschine vorgesehen ist.

11. Brüheinrichtung nach Anspruch 10,
**dadurch gekennzeichnet**,
daß die die Bohrung (7) bildende Führung (6) parallel zur Schwenkachse (4) des Gehäuseteils (19) verläuft.

12. Brüheinrichtung nach Anspruch 11,
**dadurch gekennzeichnet**,
daß die Andrückvorrichtung (3) mit dem zugehörigen Kolben (25) durch Verstellen der Andrückvorrichtung (3) zumindest in einer das Espressokaffeemehl (39) verdichtenden Stellung automatisch in eine Arretierungsstellung bringbar ist.

13. Brüheinrichtung nach Anspruch 8,
**dadurch gekennzeichnet,**
daß die Feder (9) der Andrückvorrichtung (3) auf einem in der Bohrung (7) verschiebbar aufgenommenen, an der Andrückvorrichtung (3) befestigten Bolzen (8) angeordnet ist und mit ihrem einem Ende gegen einen am Bolzen (8) vorgesehenen Handgriff (12) und mit ihrem anderen Ende gegen die Oberseite (11) des im Gehäuseteil (19) ausgebildeten Einspritzkopfes (13) zur Anlage kommt.

14. Brüheinrichtung nach Anspruch 13,
**dadurch gekennzeichnet**,
daß am Gehäuseteil (19) ein quer zum Bolzen (8) verlaufender und um eine Abstützfläche (51) schwenkbarer Arretierungshebel (14) vorgesehen ist, daß der Arretierungshebel (14) über eine Paßbohrung (52) den Bolzen (8) eng umschließt und mit ihm ein Reibgesperre bildet, so daß durch Herunterdrücken des Arretierungshebels (14) in eine Entriegelungsstellung der Bolzen (8) frei verstellbar ist und durch Wegnahme des Stelldrucks In eine Arretierungsstellung der Bolzen (8) über den Arretierungshebel (14) unverschiebbar mit dem Gehäuseteil (19) verbunden ist.

15. Brüheinrichtung nach Anspruch 14,
**dadurch gekennzeichnet**,
daß der Arretierungshebel (14) durch die Wirkung einer Druckfeder (16) stets in seiner den Bolzen (8) unverschiebbar haltenden Arretierungsstellung hält.

16. Brüheinrichtung nach Anspruch 1,
**dadurch gekennzeichnet**,
daß der Kolben (25) eine zur Druckkammer (40) hin offene Düse (20) aufweist, die mit einer zwischen Kolben (25) und Gehäuseteil (11) ausgebildeten Leitung mit einer das heiße Wasser unter Druck setzenden Fördereinrichtung verbunden ist.

17. Brüheinrichtung nach Anspruch 1,
**dadurch gekennzeichnet**,
daß der Kolben (25) zu seiner Verschiebung mit einer Andrückvorrichtung versehen ist, die aus einer am Gehäuseteil (19) und am Kolben (25) ausgebildeten Gewindeanordnung besteht.

18. Brüheinrichtung nach Anspruch 1,
**dadurch gekennzeichnet,**
daß am Siebkorb (29) eine Handhabe (62) radial herausragend ausgebildet ist.

## Claims

1. A brewing device (1) for a household espresso coffee machine including a piston (25), vertically slidable in a housing part (19), and a filter basket (29) to be filled with ground coffee (39) which is retained in a horizontally movable filter basket holder (2) and which, when the piston (25) is lowered and reaches into the filter basket (29) (working position), forms with it a pressure chamber (40) in which the ground coffee (39) is enclosed, and into which, on the piston side, hot water under pressure is urged through a conduit (20), and from which, on the filter basket holder side, the prepared espresso coffee beverage is discharged through at least one outlet opening (38),
**characterised** in that the filter basket holder (2) with the filter basket (29), when the piston (25) is lifted, can be swung about a vertically extending tilting axis (4) out of the range of effect of the piston (25), in that the tilting range of the filter basket holder (2) reaches from its working position to its feed position in which the filter basket (29) is accessible from the outside, and in that the filter basket holder (2), in its working position only, is secured with respect to the housing part (19) against movement in a vertical direction by supporting elements (43, 42) provided on both the filter basket holder (2) and the housing part (19).

2. A brewing device as claimed in claim 1,
**characterised** in that the position of the tilting axis (4) is determined by two points of support (31) which are provided on the housing part (19) and are disposed outside the range of effect of the piston (25).

3. A brewing device as claimed in claim 1,
**characterised** in that the supporting elements (42, 43) are arranged at the housing part (19) and the filter basket holder (2), spread around the pressure chamber (40).

4. A brewing device as claimed in claim 3,
**characterised** in that those supporting elements (43, 42) which are disposed on top of the sectional plane (A-A) of filter basket holder (2) and housing part (19), when the filter basket holder (2) is swung into the housing part, are arranged in the closing direction (Y) in the front area (49), and in that those supporting elements (43, 42) which are disposed below the partition plane (55) of filter basket holder (2) and housing part (19), when the filter basket holder (2) is swung into the housing part, are arranged in the closing direction (Y) in the rear area (50).

5. A brewing device as claimed in claim 4,
**characterised** in that the supporting elements (43, 42) extend substantially concentrically in relation to the tilting axis (4).

6. A brewing device as claimed in claim 5,
**characterised** in that the supporting elements (42, 43) extend in parallel to the sectional plane (A-A), and in that they are provided with reinforcing ribs (45, 46) which extend transversely to the sectional plane (A-A).

7. A brewing device as claimed in claim 2,
**characterised** in that the filter basket holder (2) is furnished with a pivot pin (28), the ends of which can be hung into the mounting lugs arranged at the housing part (19), whereby it is secured against movement in a vertical direction.

8. A brewing device as claimed in claim 1,
**characterised** in that the piston (25) is provided with a press-on arrangement (3) which is slidable in opposition to the effect of a displacement force and is guided in the housing part (19).

9. A brewing device as claimed in claim 8,
**characterised** in that the press-on arrangement (3) of the filter basket holder (2) is slidably accommodated, in opposition to the effect of a spring (9), in a guide (6) of the housing part (19) extending upwardly in the direction of motion of the piston (25).

10. A brewing device as claimed in claim 9,
**characterised** in that the guide (6) for the slidable accommodation of the press-on arrangement (3) of the filter basket holder (2) is a cylindrical bore (7), which is provided in the stationary housing part (18) of the espresso coffee machine.

11. A brewing device as claimed in claim 10,
**characterised** in that the guide (6) forming the bore (7) extends in parallel to the tilting axis (4) of the housing part (19).

12. A brewing device as claimed in claim 11,
**characterised** in that the press-on arrangement (3) with the associated piston (25) can be moved to adopt automatically a locking position by displacing the press-on arrangement (3) at least in a position in which the ground espresso coffee (39) is compressed.

13. A brewing device as claimed in claim 8,
**characterised** in that the spring (9) of the press-on arrangement (3) is mounted on a pin (8), incorporated slidably in the bore (7) and attached to the press-on arrangement (3), and, with its one end, moves into abutment with a handle (12) furnished at the pin (8) and, with its other end, moves into abutment with the upper side (11) of the injection tip (13) provided in the housing part (19).

14. A brewing device as claimed in claim 13,
**characterised** in that a locking lever (14) is provided at the housing part (19) which extends transversely to the pin (8) and is swivellable about a supporting surface (51), in that the locking lever (14), by way of a fitting bore (52), tightly encloses the pin (8) and forms a friction-type lock with it, so that the pin (8) is freely adjustable when the locking lever (14) is depressed into an unlocking position and, when the adjusting pressure is removed to cause a locking position, the pin (8) is undisplaceably coupled to the housing part (19) by the locking lever (14).

15. A brewing device as claimed in claim 14,
**characterised** in that the effect of a compression spring (16) constantly keeps the locking lever (14) in its locking position, in which the pin (8) is held to be undisplaceable.

16. A brewing device as claimed in claim 1,
**characterised** in that the piston (25) includes a jet (20), which is open towards the pressure chamber (40), and which is connected with a supply device, subjecting the hot water to pressure, through a conduit provided between the piston (25) and the housing part (11).

17. A brewing device as claimed in claim 1,
**characterised** in that the piston (25), for its displacement, is provided with a press-on arrangement which is composed of a threaded arrangement provided at the housing part (19) and the piston (25).

18. A brewing device as claimed in claim 1,
**characterised** in that a handle (62) is provided at the filter basket (29) so as to project radially therefrom.

## Revendications

1. Percolateur (1) pour une machine à café express ménagère comportant une partie de boîtier (19), des pistons (25) à déplacement vertical et un panier à tamis (29) susceptible d'être rempli avec du café, qui est maintenu dans un porte-panier à tamis (2) mobile à l'horizontale et qui forme une chambre de pression (40) enfermant le café moulu (39) avec le piston (25) lorsque celui-ci est abaissé et s'engage dans le panier à tamis (29) (position de travail), de l'eau chaude étant pressée sous pression dans la chambre de pression du côté du piston, par l'intermédiaire d'une conduite (20), le café express préparé s'écoulant hors de la chambre de pression du côté du porte-panier à tamis par l'intermédiaire d'au moins une ouverture de sortie (38), caractérisé en ce que, lorsque le piston (25) est soulevé, le porte-panier à tamis (2) peut pivoter avec le panier à tamis (29) autour d'un axe de pivotement (4) vertical, en dehors de la zone d'action du piston (25), en ce que la zone de pivotement du porte-panier à tamis (2) s'étend depuis sa position de travail jusqu'à sa position de chargement dans laquelle le panier à tamis (29) est accessible depuis l'extérieur et en ce que le porte-panier à tamis (2) est tout d'abord assuré dans sa position de travail contre un mouvement vertical, par rapport au boîtier (19) par des éléments d'appui (43, 42) formés tant sur le porte-panier à tamis (2) que sur la partie de boîtier (19).

2. Percolateur selon la revendication 1, caractérisé en ce que la position de l'axe de pivotement (4) est fixée grâce à deux points de fixation (31) formés sur la partie de boîtier (19) et se trouvant en dehors de la zone d'action du piston (25).

3. Percolateur selon la revendication 1, caractérisé en ce que les éléments d'appui (42, 43) sont agencés sur le porte-panier à tamis (2) et sur la partie de boîtier (19), répartis autour de la chambre de pression (40).

4. Percolateur selon la revendication 3, caractérisé en ce que les éléments d'appui (43, 42) qui se trouvent au-dessus du plan de joint (A-A) du porte-panier à tamis (2) et de la partie de boîtier (19) lorsque le porte-panier à tamis (2) est pivoté vers l'intérieur, sont situés dans la région antérieure (49) en direction de fermeture (Y) et en ce que les éléments d'appui (43, 42) qui se trouvent au-dessous du plan de joint (55) du porte-panier à tamis (2) et de la partie de boîtier (19) lorsque le porte-panier à tamis (2) est pivoté vers l'intérieur, sont situés dans la région postérieure (50) en direction de fermeture (Y).

5. Percolateur selon la revendication 4, caractérisé en ce que les éléments d'appui (43, 42) s'étendent sensiblement de manière concentrique par rapport à l'axe de pivotement (4).

6. Percolateur selon la revendication 5, caractérisé en ce que les éléments d'appui (43, 42) s'étendent parallèlement au plan de joint (A-A) et en ce que ceux-ci sont pourvus de nervures de renforcement (45, 46) s'étendant transversalement au plan de joint (A-A).

7. Percolateur selon la revendication 2, caractérisé en ce que le porte-panier à tamis (2) présente un ergot d'articulation (28) qui est susceptible d'être suspendu avec ses extrémités dans des oeillets de fixation agencés sur la partie de boîtier (19) et qui est ainsi assuré à l'encontre d'un mouvement en direction verticale.

8. Percolateur selon la revendication 1, caractérisé en ce que le piston (25) est pourvu d'un dispositif de pression (3) qui est susceptible d'être déplacé à l'encontre de l'effet d'une force de réglage, et qui est guidé dans la partie de boîtier (19).

9. Percolateur selon la revendication 8, caractérisé en ce que le dispositif de pression (3) du porte-panier à tamis (2) est reçu à déplacement contre l'effet d'un ressort (9) dans un guidage (6) de la partie de boîtier (19) s'étendant en haut dans la direction de mouvement du piston (25).

10. Percolateur selon la revendication 9, caractérisé en ce que le guidage (6) destiné à recevoir à déplacement le dispositif de pression (3) du porte-panier à tamis (2) est un alésage cylindrique (7) qui est prévu dans la partie de boîtier (18) fixe de la machine à café express.

11. Percolateur selon la revendication 10, caractérisé en ce que le guidage (6) formant l'alésage (7) est parallèle à l'axe de pivotement (4) de la partie de boîtier (19).

12. Percolateur selon la revendication 11, caractérisé en ce que le dispositif de pression (3) avec le piston (25) associé peut être mis automatiquement dans une position d'arrêt en réglant le dispositif de pression (3) tout au moins dans une position de compression du café moulu express (39).

13. Percolateur selon la revendication 8, caractérisé en ce que le ressort (9) du dispositif de pression (3) est agencé sur un boulon (8) reçu à déplacement dans l'alésage (7) et fixé sur le dispositif de pression (3) et vient en appui avec une de ses extrémité contre une poignée (12) prévue sur le boulon (8) et avec l'autre extrémité contre la partie supérieure (11) d'une tête d'injection (13) réalisée sur la partie de boîtier (19).

14. Percolateur selon la revendication 13, caractérisé en ce qu'un levier d'arrêt (14) pivotant autour d'une surface d'appui (51) et s'étendant transversalement au boulon (8) est prévu sur la partie de boîtier (19), en ce que le levier d'arrêt (14) entoure étroitement le boulon (8) par l'intermédiaire d'un alésage ajusté (52) et forme avec lui un enrayage à friction de sorte qu'en appuyant vers le bas le levier d'arrêt (14) dans une position de déverrouillage, le boulon (8) peut être librement réglé et en enlevant la pression de réglage dans une position d'arrêt, le boulon (8) est relié de manière indéplaçable à la partie de boîtier (19) par l'intermédiaire du levier d'arrêt (14).

15. Percolateur selon la revendication 14, caractérisé en ce que le levier d'arrêt (14) tient grâce à l'effet d'un ressort de compression (16) toujours dans sa position d'arrêt, retenant de manière indéplaçable le boulon (8).

16. Percolateur selon la revendication 1, caractérisé en ce que le piston (25) présente une buse (20) ouverte vers la chambre de pression (40), ladite buse étant reliée à un dispositif de convoyage qui met l'eau chaude sous pression, par une conduite réalisée entre le piston (25) et la partie de boîtier (19).

17. Percolateur selon la revendication 1, caractérisé en ce que pour son déplacement, le piston (25) est pourvu d'un dispositif de pression qui est constitué par un dispositif à pas de vis réalisé sur la partie de boîtier (19) et sur le piston (25).

18. Percolateur selon la revendication 1, caractérisé en ce qu'une manette (62) est réalisée en saillie radiale sur le panier à tamis (29).
